# EUROPEAN PATENT APPLICATION

(11) **EP 4 215 450 A1**
(43) Date of publication of application: **26.07.2023**
(21) Application number: 21869128.5
(22) Date of filing: 25.08.2021
(51) Int. Cl.: B65D 1/26

(54) **CUP AND METHOD FOR PRODUCING SAME**

(30) Priority: 16.09.2020 JP 2020155298
(71) Applicant: Toyo Seikan Co., Ltd., Tokyo 141-8640 (JP)
(72) Inventor: SATO Erika, Yokohama-shi, Kanagawa 230-0001 (JP); MURASE Takeshi, Yokohama-shi, Kanagawa 230-0001 (JP); TANAKA Shouta, Yokohama-shi, Kanagawa 230-0001 (JP); SASAJIMA Nobuhiro, Yokohama-shi, Kanagawa 230-0001 (JP)
(74) Representative: dompatent von Kreisler Selting Werner - Partnerschaft von Patent- und Rechtsanwälten mbB
(86) International application number: PCT/JP2021/031080
(87) International publication number: WO 2022/059441

(57) **Abstract**

To provide a cup made of metal and a method of manufacturing the same capable of reducing material costs and molding costs, preventing deformation while reducing weight, preventing a user's mouth or hand from touching an edge of a metal material, and preventing hygiene problems. A cup (100) made of metal open on an upper surface side includes a bottom portion (101) and a body portion (102), and includes a curled portion (110) at the tip end on an upper opening (103) side of the body portion (102). The curled portion (110) includes a curvature region (111) from the body portion (102) toward the tip end, and a section at least from the body portion (102) to a lowermost portion (1 10u) of the curled portion (110) in the curvature region (111) is configured to have a radius of curvature that decreases stepwise or continuously.

## Description

### Technical Field

The present invention relates to a cup made of metal open on an upper surface side, and including a bottom portion and a body portion and a method of manufacturing the same.

### Background Art

In recent years, in order to conserve resources, reduce waste, and the like, there has been a demand for a lightweight, inexpensive, and easily recyclable cup that can be used as an alternative to a cup made of paper, plastic, or the like.

A cup made of metal, open on an upper surface side, and used as tableware or as a cup to be filled with beverages, food, or the like is well known (refer to Patent Document 1 or the like), and can conceivably be applied.

### Citation List

### Patent Literature

Patent Document 1: JP 2020-093847 A
Patent Document 2: JP 2020-508874 A

### Summary of Invention

### Technical Problem

As known cups open on an upper surface side, cups made of metal that are washed and used many times, such as those used for tableware, are well known. However, because of the need to increase durability in consideration of long-term use, a certain plate thickness is necessary to increase strength, resulting in higher material costs and molding costs and a heavier weight, thus making the cup a highly problematic alternative to cups made of paper, plastic, or the like.

In recent years, the recycling capabilities for metal cans have improved, and thus metal cups made of thin materials can be conceivably used as tableware, while reducing material costs and molding costs and achieving a lighter weight.

In particular, when using thin materials, the tip end of the upper opening side of the body portion needs to be protected since it is in direct contact with the mouth or hand during use, washing, or the like.

Further, when using thin materials, the cup is liable to be deformed and needs to be reinforced.

As a cup having such a function, there is known a cup in which a tip end on an upper opening side of a body portion is processed into a curled shape (see Patent Documents 1, 2).

However, in these known techniques, when a liquid enters the inside of the curled shape, the liquid cannot be easily discharged. Therefore, there is a problem in terms of hygiene in applications where a user cleans and repeatedly uses the cup.

In addition, depending on the position of the tip end of the curl, there is a possibility that protection from direct contact with the mouth or hand is insufficient or a scratch is generated when the cup comes into contact with an adjacent cup.

The present invention has been made to solve the above-described problems, and an object of the present invention is to provide a cup made of metal and a method of manufacturing the same, which can reduce material costs and molding costs, reduce weight, prevent deformation, prevent a user's mouth or hand from touching an edge of a metal material, prevent a scratch from generating when the cup comes into contact with an adjacent cup, and prevent a hygiene problem.

### Solution to Problem

The cup according to the present invention is a cup made of metal open on an upper surface side, and including a bottom portion and a body portion, in which the body portion includes a curled portion at a tip end on an upper opening side, the curled portion includes a curvature region from the body portion toward the tip end, and a section at least from the body portion to a lowermost portion of the curled portion in the curvature region is configured to have a radius of curvature decreasing stepwise or continuously, thereby solving the above-described problems.

A method of manufacturing a cup according to the present invention is a method of manufacturing a cup made of metal open on an upper surface side, and including a bottom portion and a body portion, in which a tip end on an upper opening side of a body portion of a cup material is deformed outward, and then the tip end on the upper opening side of the body portion that has been deformed is further processed to form a curled portion, thereby solving the above-described problems.

### Advantageous Effects of Invention

According to the cup of claim 1 of the present invention, the curled portion includes a curvature region from the body portion toward a tip end, and a section at least from the body portion to a lowermost portion of the curled portion in the curvature region is configured to have a radius of curvature that decreases stepwise or continuously, so that the curvature region of the curled portion sufficiently reinforces the shape to prevent deformation, and an edge of a metal material at the tip end of the curled portion can be positioned away from the body portion, thereby easily discharging liquid that has entered the inside of the curled shape.

Further, the edge of the metal material at the tip end of the curled portion can be directed toward the body portion side with a small radius of curvature, so that a user's mouth or hand can be prevented from touching the edge and occurrence of a scratch can be prevented when coming into contact with an adjacent cup.

According to the configuration recited in claim 2, the edge of the metal material at the tip end of the curled portion is directed toward the body portion and upward from the horizontal, thus more reliably preventing a user's mouth or hand from touching the edge.

According to the method of manufacturing a cup of claim 9 of the present invention, a tip end on an upper opening side of a body portion of a cup material is deformed outward, and then the tip end on the upper opening side of the body portion that has been deformed is further processed to form a curled portion, so that a cup can be manufactured in which the curled portion includes a curvature region from the body portion toward a tip end, and a section at least from the body portion to a lowermost portion of the curled portion in the curvature region is configured to have a radius of curvature that decreases stepwise or continuously.

### Brief Description of Drawings

FIG. 1 is a perspective view of a cup according to an embodiment of the present invention.
FIG. 2 is a cross-sectional explanatory view of a curled portion of the cup according to the embodiment of the present invention.
FIG. 3 is a diagram illustrating a step of forming the curled portion of the cup according to the embodiment of the present invention.
FIG. 4 is a diagram illustrating a step of forming the curled portion of the cup according to the embodiment of the present invention.
FIG. 5 is a cross-sectional explanatory view of the curled portion of the cup according to the embodiment of the present invention.
FIG. 6 is a cross-sectional view of the curled portion of the cup according to the embodiment of the present invention.
FIG. 7 is a cross-sectional view of a curled portion of a cup according to another embodiment of the present invention.

### Description of Embodiments

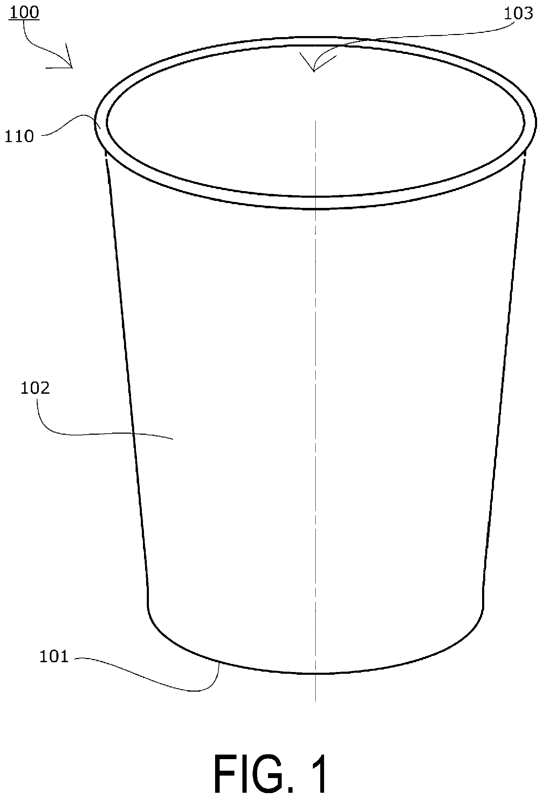

As illustrated in FIG. 1, a cup 100, which is an embodiment of the present invention, has an alternative form to well-known paper cups and plastic cups, and includes a bottom portion 101 and a body portion 102, is made of metal, and includes an upper opening 103 open on an upper surface side.

A curled portion 110 is provided at the tip end on the upper opening 103 side of the body portion 102.

In the present embodiment, the body portion 102 is formed in a shape in which an upper portion thereof expands outward except for the vicinity of the bottom portion 101 and the vicinity of the upper opening 103.

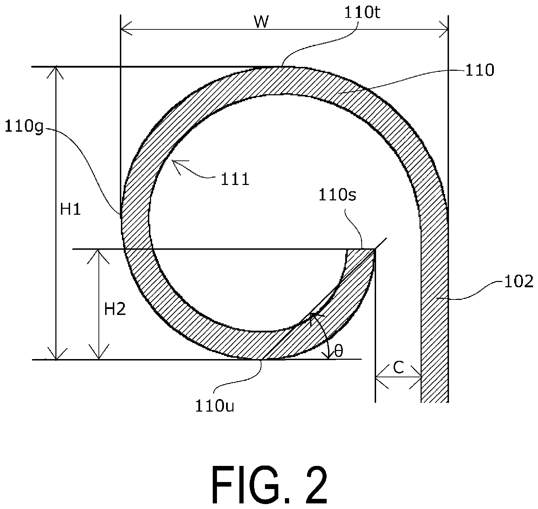

As illustrated in FIG. 2, the curled portion 110 is provided at the upper tip end portion of the body portion 102, and includes a curvature region 111 extending from the body portion 102 toward a tip end 110s.

A section from the body portion 102 to a lowermost portion 110u of the curled portion 110 in the curvature region 111 is configured so that the radius of curvature decreases stepwise or continuously.

In addition, the tip end 110s of the curled portion 110 is positioned above the lowermost portion 110u of the curled portion 110, and the curled portion 110 includes a portion closer to a side wall of the body portion 102 than the lowermost portion 110u on the tip end 110s side compared with the lowermost portion 110u.

In the curvature region 111, it is desirable that a maximum radius of curvature R1 is from 1.2 to 2.0 mm, preferably from 1.2 to 1.25 mm, and a minimum radius of curvature R2 is from 0.5 to 1.0 mm in the section from the body portion 102 to the lowermost portion 110u of the curled portion 110.

Further, it is desirable that a horizontal width W between an inner periphery of the side wall of the body portion 102 and an outermost peripheral portion 110g of the curled portion 110 is from 2.0 to 5.0 mm, preferably 2.5 mm.

A height H1 from the lowermost portion 110u to an uppermost portion 110t of the curled portion 110 is from 1.0 to 5.0 mm, preferably 2.7 mm or less.

These numerical values are suitable for optimizing the feel of the overall size and shape of the curled portion 110 and for optimizing storage and handling.

It is desirable that a distance H2 in the height direction between the tip end 110s of the curled portion 110 and the lowermost portion 110u of the curled portion 110 is 0.3 mm or greater, preferably 0.5 mm or greater in order to prevent a mouth or hand from directly touching the tip end 110s.

A distance C in the horizontal direction between a portion of the curled portion closest to the side wall of the body portion and an outer periphery of the side wall of the body portion is preferably 1.0 mm or less in order to prevent a mouth or hand from directly touching the tip end 110s, and is preferably 0.5 mm or greater in order to discharge liquid that has entered the inside of the curled shape.

A rising angle θ of a line connecting the lowermost portion 110u of the curled portion 110 and the tip end 110s of the curled portion 110 with respect to the horizontal direction is preferably in the range from 1° to 70°, particularly from 5° to 70°, and more preferably from 20° to 70°. In order to prevent a mouth or hand from directly touching the tip end 110s, it is desirable that the tip end 110s and the outer periphery of the side wall of the body portion are close to each other, but when there is a certain distance for the convenience of equipment or dischargeability of the liquid entering the inside of the curled shape, it is desirable that the angle be 40° or greater, and it is desirable that the angle be 50° or less for the discharge of the liquid entering the inside of the curled shape.

An embodiment of a method of manufacturing the cup 100 including the above-described curled portion 110 will be described below.

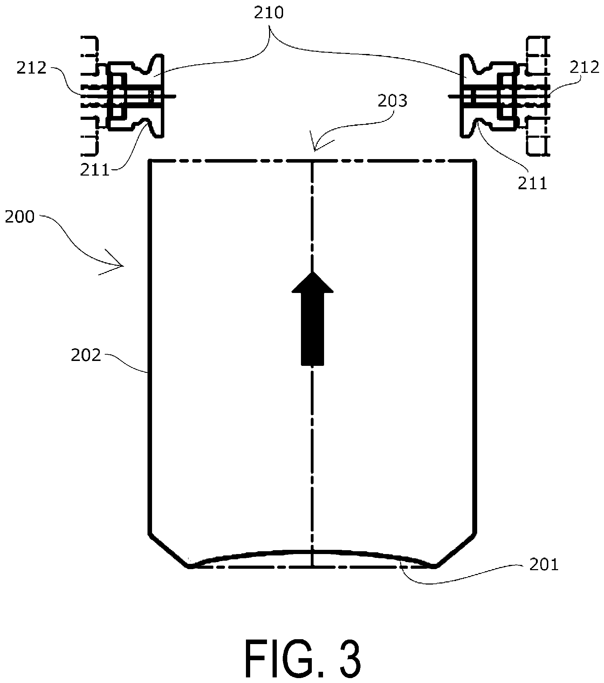

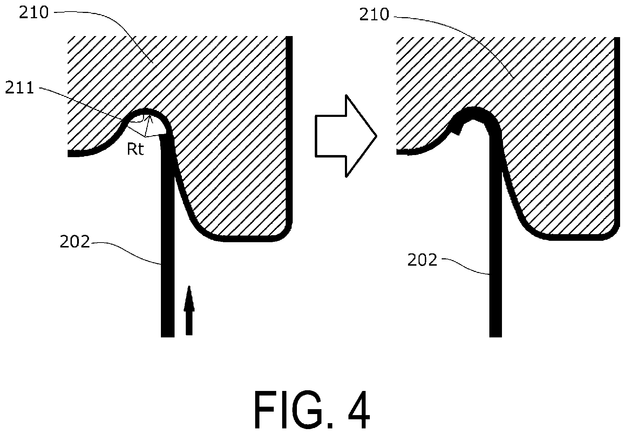

As illustrated in FIGS. 3 and 4, a curl forming tool 210 is rotatable about a tool rotation axis 212, includes a pressing curved surface 211 having a radius of curvature Rt in a cross-sectional view including the tool rotation axis 212, and a plurality of curl forming tools 210 are disposed on a circumference formed by an upper opening 203 of a body portion 202 of a cup material 200.

While the cup material 200 and the curl forming tool 210 are relatively rotated along the central axis of the cup material 200, the tip end on an upper opening 203 side of the body portion 202 is pressed against the pressing curved surface 211 of the curl forming tool 210, so that the tip end on the upper opening 203 side of the body portion 202 is deformed outward along the radius of curvature Rt of the pressing curved surface 211 to form the curled portion 110 of the cup 100.

After forming the curled portion 110, the body portion 202 is reduced in diameter to form a tapered portion, whereby the cup 100 made of metal as illustrated in FIG. 1 is obtained.

The method of forming the curled portion 110 is not limited to the following. For example, the curled portion 110 is processed a plurality of times with a plurality of curl forming tools 210 having the pressing curved surfaces 211 with different radii of curvature to be formed into a final shape.

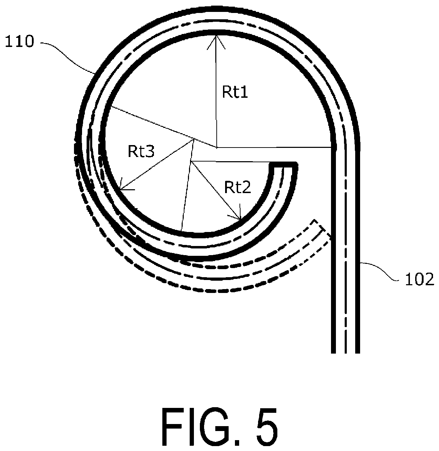

In the present embodiment, by first processing with an initial curl forming tool having the pressing curved surface 211 with a radius of curvature Rt2, then processing with an intermediate curl forming tool having the pressing curved surface 211 with a radius of curvature Rt3, and finally processing with a final curl forming tool having the pressing curved surface 211 with a radius of curvature Rt1, the curled portion 110 whose radius of curvature decreases stepwise from the body portion 102 of the curvature region as illustrated in FIG. 5 can be formed. This prevents direct contact of the tip end of the curled portion 110 with the mouth or hand, and facilitates the discharge of liquid that has entered the inside of the curled shape.

When a single curl forming tool is used, the curl forming tool and the cup are relatively moved while rotating them with the center of the curl forming tool or the center of the cup material as an axis to deform the entire circumference of the tip end on the upper opening side of the body portion of the cup material outward, and then the entire circumference of the tip end on the upper opening side of the deformed body portion is further processed to form the curled portion.

A portion indicated by a dotted line in FIG. 5 illustrates a case of being processed with the pressing curved surface 211 having the same radius of curvature Rt1, and in this case, it is difficult to prevent a mouth or hand from being directly touched by the tip end of the curled portion 110 and to discharge the liquid that has entered the inside of the curled shape.

Actually, when the curled portion 110 is processed with the curl forming tool 210, the radius of curvature of the previously processed portion of the curled portion 110 may slightly increase at the time of the next processing. Therefore, a straight portion close to a straight line (having a large radius of curvature) in a cross-sectional view may be formed in the vicinity of the tip end 110s.

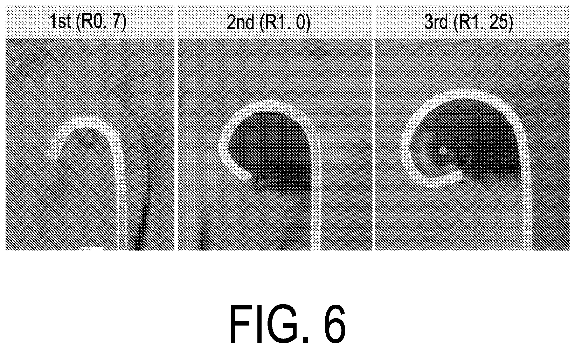

For example, FIG. 6 illustrates an example of first processing with an initial curl forming tool having the pressing curved surface 211 with a radius of curvature of 0.7 mm, then processing with an intermediate curl forming tool having the pressing curved surface 211 with a radius of curvature of 1.0 mm, and finally processing with a final curl forming tool having the pressing curved surface 211 with a radius of curvature of 1.25 mm, where a straight portion having a large radius of curvature is formed on the tip end side.

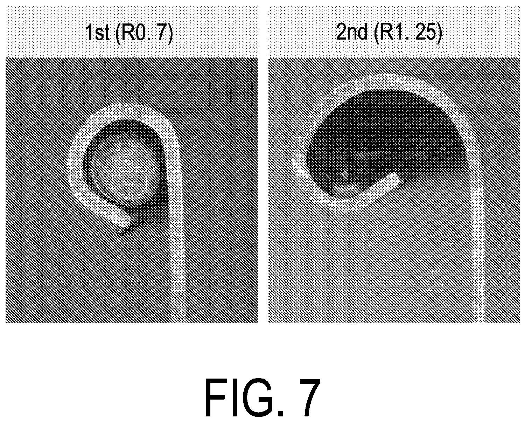

Further, FIG. 7 illustrates an example of first processing with an initial curl forming tool having the pressing curved surface 211 with a radius of curvature of 0.7 mm, then processing with a final curl forming tool having the pressing curved surface 211 with a radius of curvature of 1.25 mm, where a straight portion having a large radius of curvature is formed on the tip end side.

Even in this case, the curled shape is formed so that the radius of curvature decreases stepwise or continuously in at least the section from the body portion 102 to the lowermost portion 110u of the curled portion 110 in the curvature region 111 by processing a plurality of times with the plurality of curl forming tools 210 having the pressing curved surfaces 211 with different radii of curvature, thereby preventing the tip end of the curled portion 110 from directly touching a mouth or hand, and facilitating the discharge of liquid that has entered the inside of the curled shape.

Note that the curl forming tool may be of any type as long as the radius of curvature of the curled portion during processing can be changed, the number of times processing is performed may be any number of times, and one continuous processing may be performed depending on the type of processing tool.

Further, in the above-described embodiment, by forming the tapered portion of the body portion 102 of the cup 100 after forming the curled portion 110, the rigidity of the curled portion 110 is increased, and the deformation of the can is suppressed, thereby facilitating processing. However, the tapered portion may be formed before processing the curled portion 110, and the cup 100 may have a shape without the tapered portion.

### Reference Signs List

100 Cup
101 Bottom portion
102 Body portion
103 Upper opening
110 Curled portion
110u Lowermost portion of curled portion
110t Uppermost portion of curled portion
110s Tip end
110g Outermost peripheral portion
111 Curvature region
112 Straight portion
120 Tapered portion
200 Cup material
201 Bottom portion
202 Body portion
203 Upper opening
210 Curl forming tool
211 Pressing curved surface
212 Tool rotation axis

## Claims

1. A cup made of metal open on an upper surface side, comprising:
a bottom portion; and
a body portion,
a tip end on an upper opening side of the body portion having a curled portion,
the curled portion having a curvature region from the body portion toward a tip end, and
a section at least from the body portion to a lowermost portion of the curled portion of the curvature region being configured to have a radius of curvature that decreases stepwise or continuously.

2. The cup according to claim 1, wherein the tip end of the curled portion is located above the lowermost portion of the curled portion, and wherein the curled portion has a portion closer to a side wall of the body portion than the lowermost portion on a tip end side compared with the lowermost portion.

3. The cup according to claim 1, wherein the curvature region has a maximum radius of curvature R1 from 1.0 to 2. 5 mm and a minimum radius of curvature R2 from 0.5 to 1. 0 mm in a section from the body portion to the lowermost portion of the curled portion.

4. The cup according to claim 1, wherein a distance H2 in a height direction between a tip end of the curled portion and a lowermost portion of the curled portion is 0. 3 mm or greater.

5. The cup according to claim 1, wherein a distance C in a horizontal direction between a portion of the curled portion closest to the side wall of the body portion and an outer periphery of the side wall of the body portion is from 0.3 to 2.0 mm.

6. The cup according to claim 1, wherein a width W in the horizontal direction between an inner periphery of the side wall of the body portion and an outermost peripheral portion of the curled portion is from 2.0 to 5.0 mm.

7. The cup according to claim 1, wherein a height H1 from the lowermost portion to an uppermost portion of the curled portion is from 1.0 to 5.0 mm.

8. The cup according to claim 1, wherein a rising angle θ of a line connecting the lowermost portion of the curled portion and the tip end of the curled portion with respect to the horizontal direction is 1 to 70°.

9. A method of manufacturing a cup made of metal open on an upper surface side, and having a bottom portion and a body portion, comprising:
deforming a tip end on an upper opening side of a body portion of a cup material outward, and
processing the tip end on the upper opening side of the body portion that has been deformed to form a curled portion.

10. The method of manufacturing a cup made of metal according to claim 9, wherein
at least an initial curl forming tool and a final curl forming tool are used,
the initial curl forming tool and the cup material are relatively moved in an axial direction of the cup material to deform the tip end on the upper opening side of the body portion of the cup material outward, and
the final curl forming tool and the cup material are relatively moved in the axial direction of the cup material to form the curled portion at the tip end on the upper opening side of the body portion of the cup material.

11. The method of manufacturing a cup made of metal according to claim 9, wherein a radius of curvature Rt1 of a cross section in an axial direction of a processing surface of the final curl forming tool is larger than a radius of curvature Rt2 of a cross section in an axial direction of a processing surface of the initial curl forming tool.

12. The method of manufacturing a container made of metal according to any one of claims 9 to 11, wherein a straight portion is formed on a tip end side of the curled portion.
